# EUROPEAN PATENT APPLICATION

(11) **EP 1 239 425 A1**
(43) Date of publication of application: **11.09.2002**
(21) Application number: 01105583.7
(22) Date of filing: 06.03.2001
(51) Int. Cl.: G07F 7/10

(54) **Password database for a portable electronic device**

(71) Applicant: Sony International (Europe) GmbH, 10785 Berlin (DE)
(72) Inventor: Becker, Johannes, Sony International Europe GmbH, 85609 Aschheim (DE)
(74) Representative: Körber, Martin, Dipl.-Phys.

(57) **Abstract**

The present invention relates to a portable electronic device 1 for user operation, comprising input means 4 enabling a user to manually input data and/or instructions to the electronic device 1, memory means 3 for storing input data, said memory means 3 comprising a password database 6 for storing password data and related data input by a user, display means 5 for displaying stored data to a user upon request and control means 2 for controlling the operation of the input means 4, the memory means 3 and the display means 5, whereby said control means 2 controls the user access to the password database 6 and the display of at least a part of the password database on said display means 5 on the basis of a master password input by a user via said input means 4

## Description

The present invention relates to portable electronic devices for user operation, and particularly to portable electronic devices which are usually and regularly carried around by a user, such as mobile telephones, personal digital assistants and the like.

In the modern world, the increasing use of electronic media and devices, wireless and wired applications and the like brings along many privacy and security issues. In many situations, the access to an application or a service or the use of a device is protected to ensure that only an entitled user is using the device, the application, the service etc. The protection includes passwords, personal identification numbers, and/or username/password combinations. Examples are credit cards, bank cards, mobile telephones, personal digital assistants, computers, internet access, intranet access, door access codes, code protected pad-locks or suitcases, car radios etc. The passwords, access codes etc. usually consist of letters, numbers, special characters and/or combinations thereof. In the sense of the present invention, the term password covers all different ways of protecting the access to services, devices and the like by entry codes, access codes, passwords and the like, which have to be manually input or manually chosen by a user in order to gain access to the service or the device.

In order to ensure privacy, security and non-repudiation of services and devices, the passwords should not be too simple to avoid that somebody else can easily guess and use them. Further, the passwords should not be written down or kept in other form in order to avoid that somebody else finds and uses them. In case that a password is rarely used such as e. g. a super-password or a master-password, it has to be kept in written from or the like since it cannot be memorised, and thus should be hidden in a secret place. Passwords, which are difficult and thus hard to guess by somebody else, are usually very difficult to memorise by a respective user. If the password cannot be chosen by the user but is preset, such as e. g. with bank cards or credit cards, these passwords are usually hard to memorise because the user cannot link them to something else in order to facilitate his memory. Passwords, that are rarely used and kept and hidden in a secret place, can be lost since the user may forget the hidden place. Additionally, an increasing number of services and devices can only be accessed through a corresponding password. The above described disadvantages together with the increasing number of passwords necessary in modern life necessitate an easy tool for users to memorise their passwords and to still have them available any time.

For some restricted and limited technical areas, proposals have been made to facilitate the user access to different services. E. g. WO 99/10793 proposes a terminal device in which a set of passwords is stored and automatically used for accessing different services via the terminal device. If the terminal device is e. g. a GSM cell phone, different services, such as Short Message System (SMS) service, Wireless Application Protocol (WAP) service and the like are accessed by the GSM telephone transmitting the respective password automatically without the user becoming aware of it. WO99/25140 discloses a Subscriber Identity Module (SIM) card for a subscriber of a GSM cell phone, whereby different identification parameters identifying the subscriber for different application, such as per computer network, automatic TV payment system, network of a financial institution or the like are stored on the SIM card. Upon accessing the different services, the identification parameters are automatically used by the system to grant access for the subscriber. Thus, both documents are only related to the automatic access from an electronic device to applications or services through wired or wireless communication networks.

The object of the present invention is therefore to provide a portable electronic device for user operation, which allows a user to easily access and use a plurality of different passwords for respective services and/or devices.

The above object is achieved by a portable electronic device for user operation according to claim 1, comprising input means enabling a user to manually input data and/or instructions to the electronic device, memory means for storing input data, said memory means comprising a password database for storing password data and related data input by a user, display means for displaying stored data to a user upon request, and control means for controlling the operation of the input means, the memory means and the display means, whereby the control means controls the user access to the password database and the display of at least a part of said password database on the display means on the basis of a master-password input by a user via said input means.

The portable electronic device according to the present invention can e. g. be a portable terminal for a wireless telecommunication system, such as the GSM or the UMTS system, a personal digital assistant (PDA) or the like, i. e. is a type of device which is usually carried around by a user on a regular basis. In the password database, a user can store all kinds of different passwords for different services or other electronic devices. Each time the user needs a password in his daily professional or personal life, he or she can look the password up in the password database of the portable electronic device according to the present invention, so that the use of and the access to many services and devices via different respective passwords can be performed easily and safely.

Advantageously the control means checks if an input master password is valid and grants the user access to the password database if the checking result is positive. Although the general operation of the portable electronic device according to the present invention has usually to be accessed by a specific password, such as a personal identification number (PIN) in case of a portable telephone, the access to the password database is advantageously additionally protected by a master password. Only after inputting the correct master password, the user is allowed to access the password database and display or modify its content.

Further advantageously, the password database comprises a password list for storing passwords comprising letters and/or numbers and a title list for storing information relating to the usage of the respective password. E. g., if the password is a code number for a credit card, the title list would store the kind of the credit card (e. g. Visa) and the password list would store the four digit code number to be used with the credit card. In this case, the password database may further comprise a username list for storing information relating to the respective passwords. In the above example, the username list could be used to store the credit card number. Further advantageously, the password database is stored in the memory means in encrypted form. Hereby, any well known or future encryption method may be used. In this case, the memory means advantageously comprises an area for temporarily storing decrypted parts of the password database accessed by a user, whereby the area is cleared at the end of the user access. Hereby, an unauthorised access to the decrypted parts of the password database which had been displayed and/or modified by a user can be avoided.

Further advantageously, after the control means has granted a user access to the password database and at least a part of the password database is displayed on the display means, the password database is closed and the displayed data are removed from the display means after a preset period of time. Hereby, the unnecessary exposure of the content of the password database on the display means after a user has successfully entered the password database can be avoided. E. g. the password database can be closed and the displayed data can be removed from the display means if the control means detects that the user has not made any input for a certain preset period of time.

Further advantageously, the control means deletes the password database upon the input of a corresponding delete instruction by a user. In case that the user forgets the master password for accessing the password database, he or she can easily destroy the password database to avoid that its content is accessed by somebody else.

Advantageously, the portable electronic device according to the present invention is a wireless communication device of a wireless communication system, such as a portable cell phone or a personal digital assistant operatable in the GSM or UMTS system, and comprises an interface for transferring data from the password database to a wireless application so that password data can be transmitted in said wireless communication system upon user request. Hereby, password data stored in the password database can advantageously be directly and automatically used when accessing services or devices via the wireless communication system.

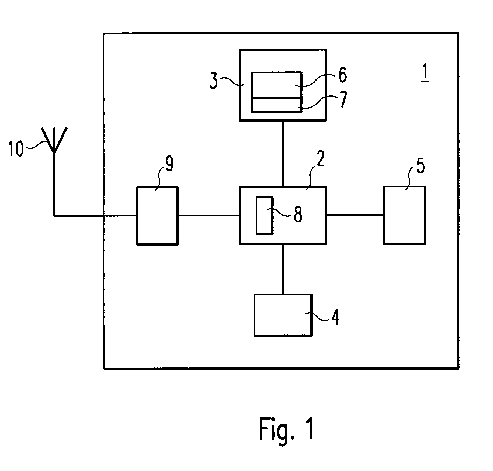

In the following description, the present invention is explained in more detail in relation to the enclosed only Fig. 1, which shows a schematic block diagram of a portable electronic device according to the present invention.

Fig. 1 hereby shows a block diagram of a portable electronic device 1 adapted to be operated in a wireless telecommunication system. Thus, the portable electronic device 1 shown in Fig. 1 can e. g. be a portable cell phone or a personal digital assistant comprising all the elements necessary for an operation in a wireless communication system, such as the GSM or the UMTS or any other wireless communication system. It is to be noted that the portable electronic device 1 shown in Fig. 1 only shows the elements and the means necessary for the explanation of the present invention. All other elements necessary for a normal operation of the portable electronic device 1 are omitted for the sake of clarity.

The portable electronic device 1 is advantageously built as a light weight and small size device adapted to be carried around by a user on a regular basis. The portable electronic device 1 is further adapted for user operation and comprises input means 4 enabling a user to manually input data and/or instructions to the electronic device 1. The input means 4 comprises e. g. a normal key pad, such as a key pad for a cell phone or a personal digital assistant, and may additionally comprise specific input keys, such as scrolling means or the like, to input particular instructions or to perform particular selection functions. Further, the portable electronic device 1 comprises a memory means for storing input data. The memory means 3 may further be used to store other data received via the wireless communication system and/or software instructions or programs necessary for the operation of and the processing in the portable electronic device 1. A control means 2 controls the operation of the portable electronic device. In case that the portable electronic device 1 according to the present invention is a portable cell phone, the control means 2 may e. g. be a base band processor. The control means controls the operation of most other processing elements of the portable electronic device 1, such as the input means 4, the memory means 3 and also a display means 5 for displaying data or information.

According to the present invention, the memory means 3 comprises a password database 6 for storing password data and related data input by a user via the input means 4. Thus, a part of the memory means 3 is reserved for a password database 6, in which a user can store a certain number of password data and related data. The maximum number of password data and related data to be stored in the password database hereby depends essentially on the capacity of the memory means 3. The password data and related data to be stored in the password database 6 can be any kind of data and information relating to the use of password of any kind and type. The password data itself can hereby comprise characters, numbers, symbols or the like and combinations thereof. The passwords can relate to the access to services or devices or any other use where a password is required. Each password is to be stored at least with one related data item which enables the identification of the use of the respective password. In the following table showing an example of a part of a password database according to the present invention, the related data are called titles. Further, the password database can comprise the username list, where respective usernames or other information may be stored. The following table 1 shows an example of a part of such a database.

**Table 1**

| **Title** | **Username** | **Password** |
|---|---|---|
| Email | John_do | ar89xk234 |
| Visa Card | 1234 5678 9876 5432 | 8547 |
| Intranet access | | trp871ayx |

As can be seen from the above example, the password database 6 according to the present invention enables the use and the storage of password data of any kind and for any use. The password data, the title data and optionally the username data are input and optionally edited via the input means 4. Upon inputting and editing data for the password database, the respective data are displayed on the display means 5 so that the user is able to monitor the input.

The control means 2 controls the user access to the password database 6 and the display of at least a part of the password database 6 on the display means 5 on the basis of a master password input by the user via the input means 4. Thus, the access to the password database 6 is only possible and will only be granted by the control means 2 if the user enters the correct master password. For the granting of the access to the password database 6 on the basis of the master password, several technical solutions are possible. E. g., the control means 2 could compare an input master password with a pre-stored master password and grants the user access to the password database 6 if the checking result is positive. Other known technologies of granting access on the basis of an input password, however, can also be used. Only after inputting the correct master password, the content of the password database 6 is accessible for a user to input new password data and related data or to edit already stored data.

To avoid an unauthorised access by directly reading out the memory means 3, the password database 6 is stored in encrypted form. Hereby, any well known encryption method may be used, e. g. the IDEA or the Blowfish algorithm. The memory means 3 further comprises an area 7 for temporarily storing decrypted parts of the password database 6 accessed by a user. The control means 2 decrypts the parts of the password database 6 a user wishes to display or to edit and stores the decrypted parts of the password database 6 temporarily in the area 7. At the end of the user access, when the control means 2 closes the password database 6, the area 7 is cleared and its data content is deleted or set to zero to prevent that someone else may access the content by reading out the memory means 3. Further, in order to avoid unnecessary exposure of the content of the password database 6 on the display means 4 after the user has successfully entered the master password and thus the password database 6, a time out counter in the control means 2 limits the time during which the content is displayed on the display means 4. After a certain preset or pre-selectable time period, during which the user has not made an input, the control means 2 closes the password database 6 and removes the displayed data from the display means 4.

Further, a function is provided which allows a user to delete the entire password database 6 after input of a corresponding delete instruction, e. g. in case that the user has forgotten the master password to access the password database 6. In this case, the control means 2 deletes the password database 6 after the user enters the corresponding delete instruction. The user has then the option to create a new password database 6 instead of the old deleted password database.

In case that the portable electronic device 1 according to the present invention is adapted to be operated in a wireless communication system, as in the example shown in

Fig. 1, the use of passwords is often necessary to operate the portable electronic device 1 with applications like Email, intranet and the like. If the passwords for these applications are stored in the password database 6, it is advantageous to provide a corresponding interface 8 in the control means 2, which allows to automatically extract the corresponding password from the password database 6 and transfer the password over the wireless communication link. Thus, the user does not need to re-type the password and also his respective username, if required, manually, but the password and optionally the username can be extracted automatically from the password database 6 in order to gain access to the respective application. The user only needs to select which password data and which related data from the password database 6 is needed in the application and the respective data are then transferred over the interface 8 of the control means 2 and via a transceiver 9 and an antenna 10 over the wireless communication link to the allocated receiving terminal, where the transmitted password data and related data are used to access the service the user wants to access.

## Claims

1. Portable electronic device (1) for user operation, comprising
input means (4) enabling a user to manually input data and/or instructions to the electronic device (1),
memory means (3) for storing input data, said memory means (3) comprising a password database (6) for storing password data and related data input by a user,
display means (5) for displaying stored data to a user upon request, and control means (2) for controlling the operation of the input means (4), the memory means (3) and the display means (5),
whereby said control means (2) controls the user access to said password database (6) and the display of at least a part of said password database on said display means (5) on the basis of a master password input by a user via said input means (4).

2. Portable electronic device (1) according to claim 1,
**characterized in,**
**that** said control means checks (2) if an input master password is valid and grants the user access to said password database (6) if the checking result is positive.

3. Portable electronic device (1) according to claim 1 or 2,
**characterized in,**
**that** said password database (6) comprises a password list for storing passwords comprising letters and/or numbers and a title list for storing information relating to the usage of the respective passwords.

4. Portable electronic device (1) according to claim 3,
**characterized in,**
**that** said password database (6) further comprises a username list for storing further information relating to the respective passwords.

5. Portable electronic device (1) according to one of the claims 1 to 4,
**characterized in,**
**that** said password database (6) is stored in said memory means (3) in encrypted form.

6. Portable electronic device (1) according to claim 5,
**characterized in,**
**that** said memory means (3) comprises an area (7) for temporarily storing decrypted parts of said password database (6) accessed by a user, whereby said area (7) is cleared at the end of the user access.

7. Portable electronic device (1) according to one of the claims 1 to 6,
**characterized in,**
**that** after said control means (2) has granted a user access to said password database (6) and at least a part of said password database (6) is displayed on the display means (5), the password database (6) is closed and the displayed data are removed from the display means (5) after a preset period of time.

8. Portable electronic device (1) according to one of the claims 1 to 7,
**characterized in,**
**that** said control means (2) deletes said password database (6) upon input of a corresponding delete instruction by a user.

9. Portable electronic device (1) according to one of the claim 1 to 8,
**characterized in**
being a wireless communication device of a wireless communication system, comprising an interface (8) for transferring data from said password database to a wireless application so that password data can be transmitted in said wireless communication system upon user request.
